# FASCICULE DE BREVET EUROPEEN

(11) **EP 3 524 522 B1**
(45) Date de publication et mention de la délivrance du brevet: **19.05.2021**
(21) Numéro de dépôt: 19155645.5
(22) Date de dépôt: 06.02.2019
(51) Int. Cl.: B64D 11/06

(54) **EXTENSION DE SIÈGE DE LONGUEUR MODULABLE, ENSEMBLE COMPORTANT UNE EXTENSION DE SIÈGE ET CABINE PASSAGERS**
SITZVERLÄNGERUNG VERÄNDERLICHER LÄNGE, EINHEIT, DIE EINE SITZVERLÄNGERUNG UMFASST, UND PASSAGIERKABINE
MODULAR SEAT LENGTH EXTENSION, ASSEMBLY COMPRISING A SEAT EXTENSION AND PASSENGER CABIN

(30) Priorité: 07.02.2018 FR 1851004
(43) Date de publication de la demande: 14.08.2019
(73) Titulaire: Stelia Aerospace, 17300 Rochefort (FR)
(72) Inventeur: MARTIN, Gabriel, 17620 ECHILLAIS (FR); TEXERAUD, Laurent, 17220 CLAVETTE (FR); GONFALONE, Sylvain, 17300 ROCHEFORT (FR)
(74) Mandataire: Ipside

(56) Documents cités:
- EP-A1- 3 225 551
- WO-A1-2012/140515
- GB-A- 907 472

## Description

La présente invention appartient au domaine des aménagements des cabines de moyens de transport de passagers.

Plus particulièrement, l'invention concerne une extension de siège de longueur modulable comportant une aire de repose-pieds. L'invention concerne également un ensemble de siège passager pour véhicule transformable en couchette comportant l'extension de siège de l'invention, ainsi qu'une cabine passagers et une méthode d'aménagement de celle-ci.

Dans le domaine du transport de personnes, il est connu de proposer aux passagers effectuant des longs trajets des sièges convertibles en couchettes permettant à un passager de prendre une position allongée. Les sièges en position de couchette permettent au passager de se reposer et/ou s'endormir dans une position confortable. Cette position du siège est obtenue typiquement par un mouvement conjugué de l'assise, du dossier et d'un repose-pieds positionnant ces différentes parties du siège à l'horizontale pour former la couchette.

Plusieurs solutions sont connues pour l'adoption de cette position horizontale, aussi appelée position de lit, par exemple le changement de configuration d'un seul siège intégrant l'assise, le dossier et le repose-pieds. De tels sièges ont cependant l'inconvénient de requérir un mécanisme complexe de transformation pour pouvoir passer d'une configuration assise à une configuration de lit.

Une solution plus simple d'un point de vue mécanique consiste à combiner un siège comportant un dossier inclinable avec un repose-pieds indépendant positionné devant lui. Il est connu par exemple d'utiliser la partie arrière d'un siège de la rangée située devant pour intégrer un repose-pieds et ainsi optimiser l'utilisation d'espace pour placer un maximum de fauteuils transformables en couchette. Les demandes de brevet US 2012/0298798 A1 et WO 2011/067286 A2 donnent des exemples de configurations des sièges de cabines transformables en lit dont le repose-pieds est intégré dans la coque du siège de devant.

En effet, l'utilisation des sièges convertibles en couchette s'avère très pénalisante en termes d'espace et ces sièges sont souvent réservés aux passagers en première classe payant un prix plus élevé pour leur voyage. Ces passagers ont toutefois des exigences élevées pour leur confort en voyage et notamment en ce qui concerne leurs sièges. L'intégration d'un repose-pieds d'un autre siège dans la même structure que celle où ils se reposent n'est donc toujours pas appréciée, les vibrations et les sons dus au mouvement des pieds du passager occupant le siège en arrière étant perçus par le passager du siège de devant.

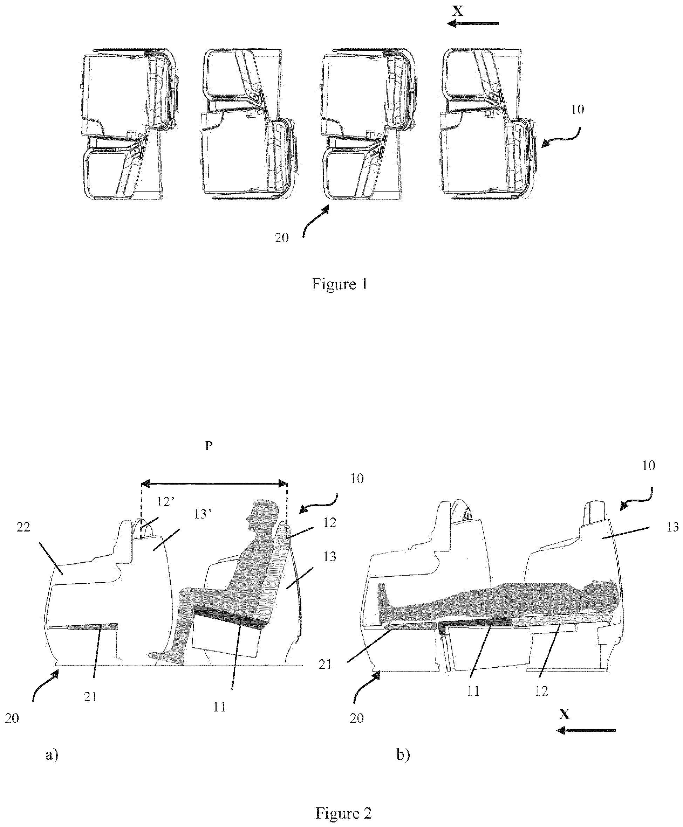

Une autre solution pour adopter la position de lit d'un siège consiste à utiliser un ottoman pour former une extension de siège indépendante, qui sert au passager en position assise ou intermédiaire pour poser ses pieds, puis en position lit est une extension en plus de l'assise et du dossier mis à l'horizontale. Cette solution se différencie de la solution antérieure en ce que l'extension repose-pieds ne se trouve pas en contact direct avec la partie arrière d'un siège d'un autre passager. Par exemple, dans les cabines d'aéronef il est connu d'utiliser une configuration en quinconce comme celle illustrée sur la figure 1 dont les ottomans sont intégrés dans une coque et sont placés devant le fauteuil correspondant. Dans la configuration en quinconce, l'ottoman n'est pas placé derrière la structure d'un siège passager de la rangée précédente mais à côté de celui-ci.

D'autre part, les distances entre chaque siège et/ou ottoman doivent prendre en compte non seulement les critères de confort du passager et de rentabilité d'espace mais aussi de sécurité, comme respecter des largeurs de passages qui conduisent à des distances minimales entre sièges permettant la sortie de passagers selon les règles d'évacuation. Néanmoins, le besoin d'un espace de passage entre deux fauteuils n'est pas partagé par tous les sièges dans une cabine de transport en particulier pour les sièges situés le long d'une paroi. Il en résulte qu'un espace non utilisé est souvent laissé devant certains sièges sans correspondre à une exigence de passage d'accès à une allée de circulation ou une sortie. De plus, le pas optimal entre le siège et le repose-pieds pour agencer le maximum de sièges possible en position de lit dans une cabine ne correspond pas, en certains cas, au pas nécessaire pour respecter les dimensions optimales des passages vers les couloirs.

Bien qu'idéalement l'aménagement des sièges doive prendre en compte les différents besoins d'espace de chaque siège, il est souvent préféré de mettre en oeuvre des environnements standardisés où tous les sièges partagent la même structure et les mêmes consignes d'installation. Il en résulte que lors de l'augmentation de pas entre sièges, il est conjointement augmenté le pas entre sièges qui ne sont pas concernés par les passages, conduisant ainsi à des espaces libres non exploitées de manière optimale.

Aujourd'hui une solution utilisée pour ne pas gaspiller d'espace est d'agrandir la coque derrière le siège lorsque cela est possible. C'est-à-dire, une place sur deux, lorsqu'il n'y a pas de besoin de maintenir un passage côté ottoman. Cette solution comporte certains inconvénients, tout d'abord la modification de l'environnement derrière le siège impose une modification de la structure de la coque. Cette modification impose une qualification de chaque version, ce qui signifie un surcoût non négligeable. De plus, cette modification est complexe d'un point de vue de la gestion de la production et de l'exploitation et elle n'est donc pas utilisée pour gérer les augmentations de pas.

Ensuite, le fait d'allonger la coque crée un espace entre le fauteuil et la coque qu'il va falloir combler. De la même façon, le fait d'agrandir la fonction lit au-dessus de la têtière force le passager à se repositionner une fois le fauteuil en position horizontale. La solution antérieure n'est donc pas souvent mise en place et les environnements standards (conçus à pas minimum) restent utilisés, tel que celui dans la figure 1.

L'état de l'art montre également des extensions de siège comprenant une partie modulable lors de l'utilisation du siège. Cet agencement offre à l'utilisateur la possibilité d'élargir l'aire de repose-pieds lorsque le siège est transformé en couchette. Cet état de l'art est illustré par le document WO 2012/140515 A1.

Le but de la présente invention est de proposer une solution pour aménager des sièges transformables en couchette dans une cabine de transport passager permettant de profiter de l'espace libre disponible entre les sièges qui n'affectent pas les passages vers les allées de circulation, tout en conservant une structure et installation standardisée pour l'ensemble des sièges.

Un autre but de l'invention est de maintenir de manière permanente la largeur du passage vers l'allée pour un aménagement de cabine donnée, ladite largeur de passage étant au moins égale à la valeur minimale nécessaire pour la sécurité et pour le confort du passager pouvant utiliser ledit passage, tout en exploitant au maximum l'espace disponible entre les sièges.

À cet effet, l'invention propose une cabine de véhicule pour le transport de passagers comportant une pluralité d'ensembles, chaque ensemble comportant un siège et une extension de siège modulable aménagés en quinconce dans ladite pluralité d'ensembles, dans laquelle chaque extension de siège modulable comprend une coque comportant un fond avant et une ouverture arrière déterminée par un volume creux ouvert vers l'arrière et une aire de repose-pieds à l'intérieur dudit volume creux adapté à recevoir les pieds d'un passager occupant le siège utilisant ladite extension de siège. La coque de chacune des extensions de siège comporte une partie invariante comportant une structure présentant des dimensions fixes et identiques pour toutes les extensions de siège de ladite pluralité d'ensembles et une partie modulable située à l'avant de ladite partie invariante, ladite partie modulable, ensemble avec la partie invariante, définissant la longueur de l'extension de siège entre l'ouverture arrière et le fond avant de la coque, ladite longueur étant modulable, lors de l'aménagement de la cabine, par une position de fixation de ladite partie modulable par rapport à la partie invariante de la coque ou par une longueur adaptée de ladite partie modulable. Dans ladite cabine, les extensions de siège de ladite pluralité d'ensembles ont une longueur constante et non modifiable lors de l'utilisation du siège.

La longueur de ladite extension de siège peut ainsi être modifiable lors de l'aménagement de la cabine pour obtenir une longueur minimale, par exemple sensiblement égale à une longueur de la partie invariante, une longueur maximale et le cas échéant au moins une longueur intermédiaire entre la longueur minimale et maximale.

L'extension de siège de l'invention peut comporter également toutes ou partie des caractéristiques suivantes considérées isolément ou en toute combinaison techniquement opérable.
- La partie modulable est mobile entre une première position dans laquelle elle se trouve rentrée au moins partiellement dans la partie invariante de la coque de sorte que la longueur de l'extension de siège est minimale et, au moins une deuxième position dans laquelle la partie modulable est déployée à l'extérieur vers l'avant de l'extension de siège et la longueur de l'extension de siège est augmentée par rapport à la longueur minimale.
- La partie modulable est choisie parmi un ensemble d'éléments de coques de longueurs différents pouvant être indifféremment fixés à la partie invariante. La partie modulable peut ainsi être longue ou courte et s'adapter à la partie invariante de manière interchangeable sans nécessairement utiliser un coulissement avec des parties cylindriques.
- La partie modulable est montée coulissante avec la partie invariante de la coque dans laquelle elle s'emboîte en tout ou partie et de sorte qu'une portion de la partie modulable peut être fixée soit dans la première position rentrée soit dans la deuxième position déployée, le cas échéant dans une position intermédiaire entre la première position et la deuxième position.
- La partie modulable de la coque comporte un volume creux mitoyen à l'aire de repose-pieds, ledit volume creux étant aménagé pour augmenter une longueur de l'aire du repose-pieds et/ou, à former et/ou intégrer des espaces de rangement d'objets.
- La partie modulable de la coque comporte une face extérieure en continuité avec une face extérieure de la partie invariante, une partie supérieure desdites faces formant ensemble une surface sensiblement plane et sensiblement horizontale pour poser des objets, ou pour intégrer des espaces de rangements d'objets.

L'invention vise également une cabine dans laquelle chacun des ensembles comportant un siège et une extension de siège est transformable en lit par un mouvement conjugué d'une assise et d'un dossier formant une surface sensiblement horizontale et en continuité avec l'aire du repose-pieds de l'extension de siège qui est placée devant dit siège.

L'invention vise également un ensemble siège et une extension de siège modulable agencées latéralement audit siège dans une structure commune.

L'invention concerne aussi une méthode d'aménagement de cabine de transport passagers, notamment d'un aéronef, comportant une pluralité d'ensembles siège-extension de siège selon l'invention. Les extensions de sièges peuvent être agencés identiquement pour tous les sièges ou différemment suivant qu'un siège est situé au bord d'une allée ou non, toujours pour maintenir une largeur de passage suffisante.

L'invention sera mieux comprise à la lecture de la description qui suit et à l'examen des figures qui l'accompagnent. Celles-ci ne sont présentées qu'à titre indicatif et nullement limitatif de l'invention.
Figure 1 : déjà citée en vue de dessus, selon l'art antérieur, un aménagement en quinconce d'une rangée de sièges transformables en couchette comportant un ottoman comme extension repose-pieds.
Figure 2 : en vue latérale, selon l'art antérieur, un siège transformable en couchette a) en position assise, b) en position de lit.
Figure 3 : en vue de dessus, selon l'art antérieur, un aménagement en quinconce de sièges transformables en couchette dans une cabine de transport de passagers matérialisant les espaces libres et non exploités entre sièges.
Figure 4 : en vue de dessus, selon l'art antérieur deux sièges successifs d'une même rangée, a) avec un pas de siège optimal, b) avec un pas de siège augmenté.
Figure 5 : Suivant une section longitudinale axiale simplifiée, une extension de siège modulable selon l'invention.
Figure 6 : Suivant une section longitudinale axiale simplifiée, un siège transformable en couchette comportant une extension repose-pieds selon l'invention. En haut) selon une longueur de lit minimum, en bas) selon une longueur de lit augmenté.
Figure 7 : Suivant une section longitudinale axiale simplifiée, un siège transformable en couchette comportant une extension repose-pieds selon l'invention. En haut) selon une longueur de lit et un pas minimum et, en bas) selon une longueur de lit et un pas augmentés.
Figure 8 : En vue de dessus, un aménagement d'une cabine de transport passagers comportant une pluralité des sièges comportant l'extension de siège selon l'invention, dans lequel la longueur des extensions de sièges est différente.
Figure 9 : En vue de dessus, un aménagement d'une cabine de transport passagers comportant une pluralité des sièges comportant l'extension de siège selon l'invention, dans lequel les extensions de sièges sont allongés de la même valeur.

Pour les besoins de la description, il sera considéré un sens avant, matérialisé par une flèche orientée suivant un axe longitudinal X de l'ensemble sur les dessins. Le choix d'un sens positif vers l'avant de l'axe longitudinal X est ici arbitraire et ne sera donc pas considéré comme une restriction de l'invention. Toutefois, sauf évidence contraire, l'avant et l'arrière d'un siège devront être interprétés par rapport au sens avant vers lequel regarde un occupant assis sur le siège.

La figure 1 montre l'aménagement en quinconce des sièges transformables en couchette dans une cabine de transport passager dont chaque siège comporte une extension pour le placement des pieds indépendante de l'assise, placée devant ledit siège, sous la forme d'un ottoman fixé au plancher et enveloppé d'une coque ouverte vers l'arrière. Dans ce type d'aménagement chaque rangée de sièges comporte une assise et un dossier d'un siège à côté d'un ottoman destiné au siège de la rangée en arrière. L'ottoman étant enveloppé dans la coque, les pieds du passager en arrière ne dérangent pas le passager dont le fauteuil est disposé à côté de l'ottoman. Dans chaque rangée la disposition du fauteuil et de l'ottoman est alternée entre gauche et droite suivant un agencement en quinconce de façon à optimiser l'espace occupé.

La figure 2 montre une représentation de l'art antérieur dans laquelle le siège 10 transformable en couchette est entouré d'un environnement 13, et un ottoman 20 est utilisé comme extension repose-pieds du siège 10. Le siège 10 comporte, par rapport au plancher, une assise 11 en position sensiblement horizontale et un dossier 12 en position sensiblement verticale (détail a). Le mouvement conjugué du dossier et de l'assise permet de positionner ces deux parties en position horizontale à une hauteur sensiblement égale à celle de l'extension repose-pieds disposée dans la continuité de l'axe longitudinal du siège (détail b). Il est ainsi obtenu une surface horizontale comportant la surface combinée du dossier, de l'assise et de l'extension repose-pieds permettant au passager de s'allonger confortablement lors de son voyage.

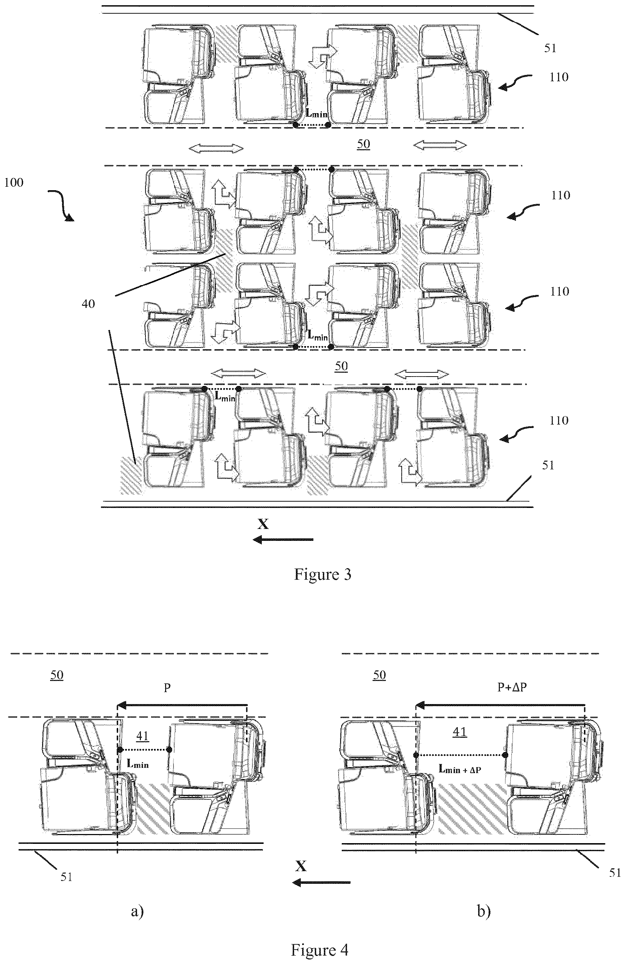

L'aménagement d'une cabine (100) comportant des sièges transformables en couchette pose des problèmes particuliers quant à l'optimisation de l'espace et l'accessibilité aux couloirs des voyageurs occupant un siège mitoyen (Figure 3). La distance entre deux sièges suivant la direction longitudinale est donc d'une part choisie pour permettre la configuration en lit du siège, et d'autre part pour maintenir un passage vers les couloirs ou allées de circulation 50. Un pas P entre deux sièges est donc contraint par la distance minimale nécessaire pour permettre au siège de prendre la position de couchette et simultanément pour maintenir au moins la largeur minimale Lmin du passage nécessaire entre deux rangées de sièges. Dans l'exemple de la figure 2, le pas est mesuré suivant le sens longitudinal entre des points de référence des sièges, par exemple d'un point du dossier 12 d'un siège en position vertical au même point longitudinal du dossier 12' du siège de la rangée suivante en position verticale.

Les figures 3 et 4 montrent des espaces libres 40 (matérialisés par des zones hachurées sur les figures) qui entre deux rangées des sièges ne sont pas utilisés pour accéder une allée de circulation 50 comme ceux du côté d'une paroi 51, ainsi que ceux disposés dans le centre de la cabine.

Sur la figure 4 en particulier il ressort que l'allongement du pas P d'une valeur ΔP (partie b de la figure) non seulement augmente la surface inutilisée, partie hachurée, mais également élargi le passage de ΔP alors que la largeur initiale est suffisante sur le plan réglementaire.

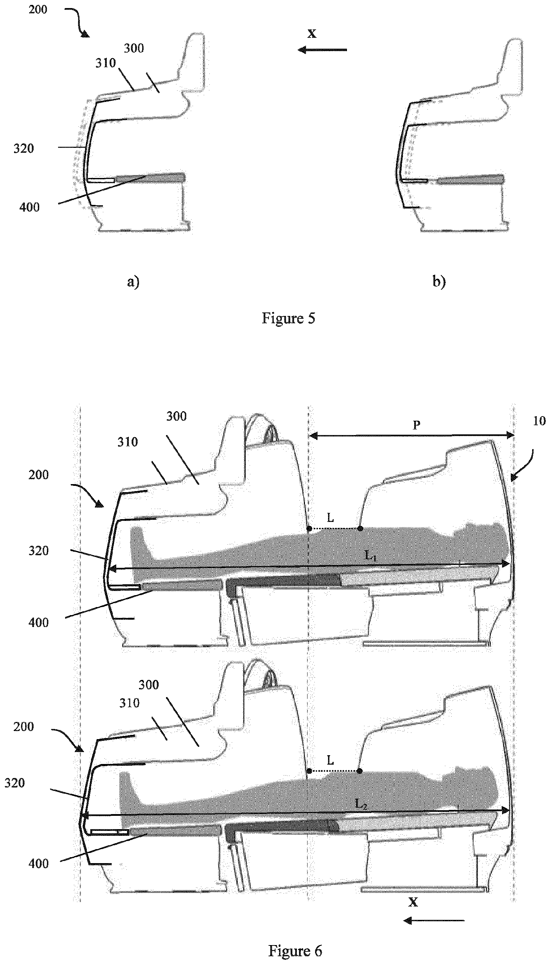

La figure 5 montre une extension de siège 200 modulable selon l'invention dans deux positions, une première position où la longueur de l'extension de siège est minimale (détail a) et dans une deuxième position (détail b) où la longueur de l'extension de siège est augmentée par rapport à la première position. Cette modification de longueur permet d'exploiter des espaces libres 40 qui ne sont pas utilisés comme passages vers une allée de circulation 50 ou qui ne sont pas nécessaires pour respecter une largeur minimale du passage, tout en permettant l'utilisation d'une structure commune pour toutes les rangés de sièges lorsque le pas de sièges est modifié.

L'extension de siège 200 selon l'invention comporte une coque 300 comportant un fond avant et une ouverture arrière déterminé par un volume creux ouvert vers l'arrière ainsi qu'une aire de repose-pieds 400. L'aire de repose-pieds 400 est placée à une hauteur permettant de former une surface plane sensiblement horizontale et en continuité de la surface d'un siège 10 en position de couchette. La coque 300 de l'extension de siège 200 supporte l'aire de repose-pieds 400 et détermine sa hauteur par rapport au plancher. La coque 300 enveloppe aussi, au moins partiellement, l'aire de repose-pieds 400 de manière à séparer physiquement l'environnement entourant les pieds et/ou jambes du passager utilisant l'extension de siège 200 de l'environnement du siège passager disposé à côté de ladite extension de siège. La coque dispose bien évidemment d'une ouverture de l'aire de repose-pieds adaptée pour recevoir les pieds et, au moins partiellement les jambes d'un passager.

Une structure de la coque 300 de l'extension de siège comporte au moins deux parties : une partie invariante 310 arrière, c'est-à-dire une structure dont les dimensions sont fixes et identiques pour toutes les extensions de siège dans un aménagement de cabine, et une partie modulable 320 avant dont une position de fixation par rapport à la partie invariante permet d'augmenter la longueur de l'extension de siège de l'invention suivant le mode de réalisation illustré.

Dans la présente demande, il doit être compris par « partie modulable » que la partie modulable 320 de l'extension de siège permet, lors de l'installation de l'aménagement de la cabine, de choisir dans un domaine autorisé, la longueur de ladite extension de siège. Comme il sera compris de la description, le choix de la longueur de l'extension de siège peut résulter de la mise en oeuvre d'une partie modulable d'une longueur adaptée, choisie parmi un jeu de parties modulables de différentes longueurs, et/ou par un montage de la partie modulable plus ou moins emboîté dans la partie invariante lors de l'aménagement de la cabine. La longueur de l'extension de siège n'est pas modulable par le passager lors de l'utilisation du siège, cette longueur restant constante lorsqu'un siège est en position relevée ou couchée.

Par exemple, la partie modulable 320 comporte une première position (fig. 5-a) et au moins une deuxième position (fig. 5-b), décalées entre elles suivant une direction longitudinale par rapport à la partie invariante 310 arrière. Dans la première position (fig. 5-a), la partie modulable 320 est emboîtée ou rentrée dans la partie invariante 310 de la coque de sorte que l'aire de repose pieds présente une plus petite longueur de l'extension de siège 200.

Dans l'au moins une deuxième position (fig. 5-b), la partie modulable 320 se trouve dans une position déployée par rapport à la partie invariante 310 et la longueur de l'extension de siège se voit augmentée par rapport à sa longueur dans la première position emboîtée de ladite partie modulable. Sur les figures 5-a) et 5-b) la partie modulable représentée en trait discontinus correspond à l'autre position possible, respectivement déployée et rentrée.

La partie modulable 320 peut être fixée à la partie invariante 310 de la coque 300 directement dans la première position emboîtée et/ou dans l'au moins une deuxième position déployée, le cas échéant dans plusieurs deuxièmes positions intermédiaires entre la première position emboîtée et une seconde position d'extension maximale. Dans ce mode de mise en œuvre de l'invention, la partie modulable 320 est télescopique par rapport à la partie invariante 310 de la coque 300 et permet un changement flexible de la configuration de l'extension de siège 200 par un coulissement associé à des moyens de blocage dans une position souhaitée.

Dans un autre mode de mise en œuvre la partie modulable est formée d'éléments de différentes longueurs pouvant être interchangés et indifféremment fixés à la partie invariante 310.

La figure 6 montre un mode de mise en œuvre de l'invention dans lequel une extension de siège 200 modulable est utilisée comme extension repose-pieds pour former la configuration de lit d'un siège d'une cabine passager. Afin d'augmenter la longueur Li utilisable en position de lit dudit siège 10 combiné à l'extension de siège, la partie modulable 320 de l'extension de siège a une forme creuse dans sa portion mitoyenne de l'aire de repose-pieds 400 permettant dans une position déployée d'allonger l'aire de celle-ci. Dans ce mode de mise en œuvre le pas entre sièges reste constant et la partie modulable permet d'obtenir une longueur de lit L₂ augmentée librement pour un siège situé contre une paroi pour autant qu'il ne se produit pas d'interférence avec la structure du siège situé devant.

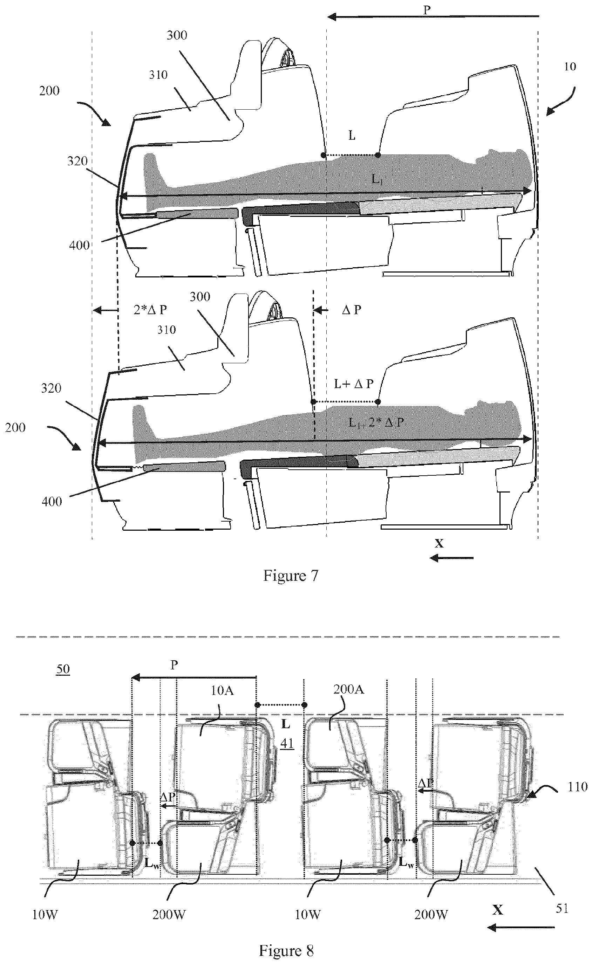

Il est également possible d'utiliser l'extension de siège 200 lors des augmentations de pas entre sièges pour exploiter de manière optimale cette augmentation de distance entre les sièges. Par exemple, dans le mode de mise en œuvre de la figure 7, le pas entre sièges est augmenté d'une valeur de ΔP, par exemple pour augmenter le confort général des sièges. Cette augmentation du pas permet d'étendre d'autant, l'extension se combinant à l'allongement du pas. Par exemple si la longueur de l'extension de siège est également modifiée de ΔP, la longueur totale de la surface de lit obtenu sera de Li+2*ΔP, il est ainsi gagné le double de la distance utilisée pour augmenter le pas de sièges, sans préjudice sur la largeur du passage entre les sièges.

La partie modulable est de préférence profilée pour former une surface en continue avec la surface extérieure de la partie invariante de la coque (Figure 5 et 6) de sorte à étendre la surface de la face supérieure de la coque dans cette zone. Dans un autre mode de réalisation, la partie modulable peut être profilée pour créer et/ou intégrer des nouveaux rangements, que ce soit du côté mitoyen de l'aire repose-pieds 400 ou du côté extérieur opposé à ladite aire repose-pieds, les nouveaux rangements pouvant être dans ce dernier cas mis à profit par le passager occupant le siège de devant dont l'extension de siège se trouve disposée dans la même rangée que celui-ci. La surface supérieure de la partie modulable 320 peut être aussi profilée de manière à former une surface plane apte à supporter des objets, cette surface étant disponible pour le passager dont le siège est disposé à côté de l'extension de siège.

L'extension de siège 200 peut être placée devant un siège pour former une structure de manière indépendante, ou intégrée latéralement à une structure d'un siège, ladite extension étant alors destinée à un autre siège situé en arrière. Suivant la dernière option, Il est possible de concevoir un ensemble comportant un siège 10 et une extension de siège 200 agencée latéralement audit siège 10 dans une structure commune audit siège et la dite extension de siège.

La figure 8 montre un exemple d'aménagement d'une cabine de véhicule pour le transport de passagers comportant une pluralité de sièges 10 transformables en couchette comportant chacun une extension de siège 200 modulable selon l'invention. Dans le dit aménagement la pluralité d'ensembles siège-extension de siège est agencée en rangées 110 parallèles à des allées 50 de circulation de la cabine. Les sièges dans une même rangée 110 sont agencés suivant un pas P et en quinconce de sorte qu'un siège, dit siège arrière, se trouve décalé latéralement par rapport à un siège, dit siège avant, précédant ledit siège arrière dans ladite rangée, et du même côté par rapport au siège avant qu'une extension de siège mitoyenne dudit siège avant.

Un espace situé entre un dossier d'un siège 10A avant, jouxtant une allée 50 de circulation, et une face avant d'une extension de siège 200A, jouxtant ladite allée 50 de circulation, mitoyenne d'un siège 10W arrière, ledit siège arrière étant séparé de ladite allée de circulation par ladite extension de siège 200A, forme un passage 41 de largeur L par lequel un occupant de siège 10W arrière peut accéder audit siège arrière depuis l'allée 50.

L'aménagement sur la figure 8 est en partie similaire à l'aménagement en quinconce montré à la fig. 1 selon l'art antérieur, toutefois l'utilisation de l'extension de siège 200 selon l'invention permet de moduler cet aménagement en fonction du siège considéré. Ainsi, la partie modulable 320 de l'extension de siège 200W opposé à une allée et mitoyenne du siège arrière 10A jouxtant une allée peut être fixée à la partie invariante 310 de ladite extension de siège en fonction du pas P des sièges pour déterminer une largeur L du passage 41 égale ou supérieure à une largeur minimale Lmin prédéfinie.

Dans l'aménagement de la figure 8 la partie modulable 320 d'une extension de siège 200W mitoyenne d'un siège 10A arrière jouxtant une allée 50, ladite extension de siège 200W étant sur un côté dudit siège opposé à ladite allée, peut être fixée à la partie invariante 310 de ladite extension de siège 200W pour déterminer un espace situé entre un dossier du siège 10W avant et une face avant ladite extension de siège 200W d'une largeur LW, prise suivant une direction sensiblement parallèle à l'allée 50, inférieure à la largeur L du passage 41, sans contrainte sur une largueur de passage à respecter.

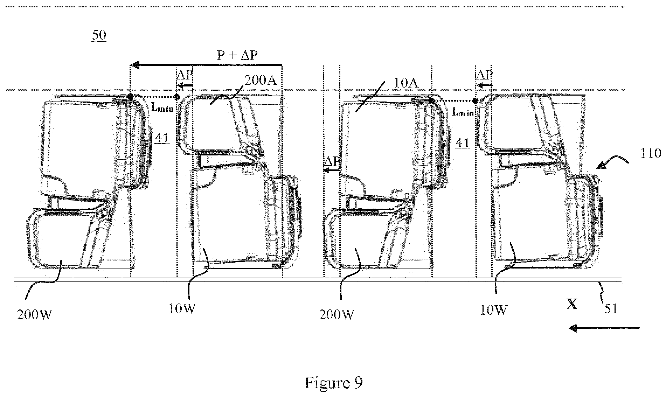

La figure 9 montre une autre possibilité d'aménagement de cabine dans laquelle la partie modulable 320 de l'extension de siège 200A jouxtant une allée et mitoyenne du siège arrière 10W est fixée à la partie invariante 310 de la dite extension de siège 200A pour obtenir une largeur du passage 41 sensiblement égale à la largeur minimale Lmin prédéfinie lorsque le pas P d'installation des sièges le permet. Cette largueur minimale est en pratique obtenue avec un allongement ΔP de la longueur entre l'ouverture et le fond de la coque 300, par rapport à une longueur minimale possible entre ladite ouverture et ledit fond de la coque, de sorte qu'il est maximisé la longueur d'un lit, résultant de la combinaison du siège converti en couchage avec l'extension de siège, pour un pas des sièges P donné en respectant la largeur minimale Lmin du passage 41. Cette largeur ΔP correspond également à un allongement d'une valeur minimale du pas P qui serait possible d'atteindre sans l'allongement de l'extension de siège 200A.

Il est également possible de réaliser une variation de l'aménagement montré sur la figure 9, dans lequel la partie modulable 320W de l'extension de siège 200W est fixée à la partie invariante 310 pour obtenir une largeur Lw sensiblement inférieure à la largeur minimale Lmin. La longueur de l'extension de siège 200W peut être ainsi augmentée pour autant qu'il ne se produit pas d'interférence avec la structure du siège situé devant 10W et, indépendamment de la valeur d'allongement choisie pour les extensions de sièges 200A jouxtant les allées.

L'utilisation de l'extension de siège selon l'invention pour aménager une cabine de sièges passagers a donc de nombreux avantages quant à l'exploitation des espaces libres 40 disponibles entre les sièges pour augmenter le confort des passagers, pour un gain sur la longueur de couchage, auquel s'ajoute la création de nouveaux espaces de rangement ou de surfaces servant par exemple de table de chevet etc. Lors de l'utilisation des sièges de la cabine, la largeur du passage d'un siège vers l'allée reste constante, que le siège situé en arrière soit en position relevée ou en position couchée. Il n'est donc pas mis en œuvre d'élément mobile dans l'extension de siège pour les besoins de l'utilisation du siège. Il en résulte une structure de l'extension de siège plus légère, plus simple et plus fiable, et moins coûteuse.

De plus, la modification de la longueur de l'extension de siège modulable permet, sans remettre en cause la structure de sièges existants, de limiter les augmentations de pas entre sièges nécessaires pour augmenter une longueur de lit. En effet, il est possible lorsque le pas P des sièges est augmenté d'une valeur ΔP d'allonger l'extension de siège de la même valeur ΔP qui se combine à l'augmentation du pas pour procurer un lit allongé de 2*ΔP.

D'un point de vue industriel, un avantage de l'invention est de pouvoir standardiser les éléments permettant de combler l'espace. L'invention permet ainsi d'utiliser une même structure commune à tous les sièges d'un type d'aménagement cabine (en quinconce) et de disposer d'éléments à rapporter sur cette structure commune, c'est-à-dire la partie invariante 310 de la coque 300 de l'extension de siège 200, soit par réglage soit par interchangeabilité, pour augmenter la longueur desdites extensions de siège de manière optimale. Il est ainsi possible de prévoir une solution d'aménagement personnalisé sans générer des coûts significatifs d'adaptation, de conversion et de qualification.

L'extension de siège selon l'invention est donc capable de s'adapter aux besoins de différents aménagements et de cabines passagers avec une seule famille de produit, ainsi que de personnaliser les sièges et aménagement des sièges grâce à la partie modulable de l'extension de siège.

## Revendications

1. Cabine de véhicule pour le transport de passagers comportant une pluralité d'ensembles, chaque ensemble comportant un siège (10, 10A, 10W) et une extension de siège (200, 200A, 200W) aménagés en quinconce dans ladite pluralité d'ensembles, dans laquelle chaque extension de siège (200, 200A, 200W) comporte une coque (300) comportant un fond avant et une ouverture arrière déterminée par un volume creux ouvert vers l'arrière et, une aire de repose-pieds (400) à l'intérieur dudit volume creux, la coque de chacune des extensions de siège comportant :
- une partie invariante (310) comportant une structure présentant des dimensions fixes et identiques pour toutes les extensions de siège de la dite pluralité d'ensembles, et
- une partie modulable (320) située à l'avant de ladite partie invariante (310), ladite partie modulable (320), ensemble avec la partie invariante (310), définissant la longueur de l'extension de siège entre l'ouverture arrière et le fond avant de la coque (300), ladite longueur étant modulable, lors de l'aménagement de la cabine, par une position de fixation de ladite partie modulable par rapport à la partie invariante de la coque ou par une longueur adaptée de ladite partie modulable,
dans ladite cabine, les extensions de siège de ladite pluralité d'ensembles ayant une longueur constante et non modifiable lors de l'utilisation du siège .

2. Cabine suivant la revendication 1, dans laquelle la longueur de ladite extension de siège est modifiable, lors de l'aménagement de la cabine, pour être fixée avec une longueur minimale, une longueur maximale et au moins une longueur intermédiaire entre la longueur minimale et maximale.

3. Cabine suivant la revendication 2, dans laquelle la longueur minimale de ladite extension de siège est sensiblement égale à une longueur de la partie invariante.

4. Cabine suivant l'une des revendications 2 ou 3, dans laquelle la partie modulable (320) est fixée entre une première position dans laquelle elle se trouve rentrée en tout ou partie dans la partie invariante (310) de la coque (300) de sorte que la longueur de l'extension de siège est minimale et, au moins une deuxième position dans laquelle la partie modulable (320) est déployée en tout ou partie à l'extérieur vers l'avant de l'extension de siège (200, 200A, 200W) et la longueur de l'extension de siège est augmentée par rapport à la longueur minimale.

5. Cabine suivant la revendication 1, dans laquelle au moins l'une des parties modulables (320) des extensions de siège de la pluralité d'ensembles siège-extension de siège comporte une longueur différente aux autres parties modulables (320) de la pluralité d'ensembles siège-extension de siège.

6. Cabine suivant l'une des revendications 2 à 5 dans laquelle la partie modulable (320) est montée coulissante avec la partie invariante (310) de la coque (300) dans laquelle elle s'emboîte en tout ou partie et de sorte qu'une portion de la partie modulable peut être fixée entre la première position rentrée ou la deuxième position déployée ou dans une position intermédiaire entre la première position et la deuxième position.

7. Cabine suivant l'une des revendications 1 à 6 dans laquelle la partie modulable (320) de la coque (300) comporte un volume creux mitoyen à l'aire de repose-pieds (400), ledit volume creux étant aménagé pour augmenter une longueur de l'aire du repose-pieds (400) et/ou, à former et/ou intégrer des espaces de rangement d'objets.

8. Cabine suivant la revendication 1 à 7 dans laquelle la partie modulable (320) de la coque (300) comporte une face extérieure en continuité avec une face extérieure de la partie invariante (310), une partie supérieure desdites faces formant ensemble une surface sensiblement plane et sensiblement horizontale pour poser des objets, ou pour intégrer des espaces de rangements d'objets.

9. Cabine suivant l'une des revendications 1 à 8, dans lequel chacun des ensembles comportant un siège et une extension de siège est transformable en lit par un mouvement conjugué d'une assise et d'un dossier formant une surface sensiblement horizontale et en continuité avec l'aire du repose-pieds de l'extension de siège qui est placée devant dit siège.

10. Cabine suivant l'une des revendications 1 à 9, dans laquelle chaque extension de siège est agencée latéralement à un siège dans une structure commune audit siège et ladite extension de siège, ladite extension de siège étant destinée à un siège situé en arrière.

11. Méthode d'aménagement d'une cabine suivant l'une des revendications 1 à 10, dans laquelle :
- les sièges de la pluralité d'ensembles siège sont agencés en rangées (110) parallèles à des allées (50) de circulation de la cabine ;
- deux sièges successifs dans une même rangée (110) sont agencés suivant un pas P et en quinconce de sorte qu'un siège, dit siège arrière, se trouve décalé latéralement par rapport à un siège, dit siège avant, précédant ledit siège arrière dans ladite rangée, et du même côté par rapport au siège avant qu'une extension de siège mitoyenne dudit siège avant ;
- un espace situé entre un dossier d'un siège (10A) avant, jouxtant une allée (50) de circulation, et une face avant d'une extension de siège (200A), jouxtant ladite allée (50) de circulation, mitoyenne d'un siège (10W) arrière, ledit siège arrière étant séparé de ladite allée de circulation par ladite extension de siège (200A), forme un passage (41) de largeur L par lequel un occupant de siège (10W) arrière peut accéder audit siège arrière depuis l'allée (50) ;
- la partie modulable (320) de l'extension de siège (200A) jouxtant une allée et mitoyenne du siège arrière (10W) est fixée à la partie invariante (310) de ladite extension de siège en fonction du pas P des sièges pour déterminer une largeur L du passage (41) égale ou supérieure à une largeur minimale Lmin prédéfinie.

12. Méthode d'aménagement suivant la revendication 11 dans laquelle la partie modulable (320) d'une extension de siège (200W) mitoyenne d'un siège (10A) arrière jouxtant une allée (50), ladite extension de siège (200W) étant sur un côté dudit siège opposé à ladite allée, est fixée à la partie invariante (310) de ladite extension de siège (200W) pour déterminer un espace situé entre un dossier du siège(10W) avant et une face avant ladite extension de siège (200W) d'une largeur LW, prise suivant une direction sensiblement parallèle à l'allée (50), inférieure à la largeur L du passage (41).

13. Méthode d'aménagement suivant la revendication 11, dans laquelle la partie modulable (320) de l'extension de siège (200A) jouxtant une allée et mitoyenne du siège arrière (10W) est fixée à la partie invariante (310) de la dite extension de siège (200) pour obtenir une largeur du passage (41) sensiblement égale à la largeur minimale Lmin prédéfinie, obtenue avec un allongement ΔP de la longueur entre l'ouverture et le fond de la coque (300), par rapport à une longueur minimale possible entre ladite ouverture et ledit fond de la coque, de sorte qu'il est maximisé la longueur d'un lit, résultant de la combinaison du siège converti en couchage avec l'extension de siège, pour un pas des sièges P donné en respectant la largeur minimale Lmin du passage (41).

## Patentansprüche

1. Fahrzeugkabine für den Transport von Passagieren, die eine Vielzahl von Baugruppen umfasst, wobei jede Baugruppe einen Sitz (10, 10A, 10W) und eine Sitzverlängerung (200, 200A, 200W) umfasst, die in der Vielzahl von Baugruppen versetzt eingerichtet sind, wobei jede Sitzverlängerung (200, 200A, 200W) eine Schale (300) umfasst, die einen vorderen Boden und eine hintere Öffnung, welche von einem nach hinten offenen Hohlvolumen bestimmt wird, und einen Fußablagebereich (400) im Inneren des Hohlvolumens umfasst, wobei die Schale jeder der Sitzverlängerungen umfasst:
- einen nicht veränderbaren Teil (310), der eine Struktur umfasst, die feste und bei allen Sitzverlängerungen der Vielzahl von Baugruppen identische Abmessungen aufweist, und
- einen modulierbaren Teil (320), der sich an der Vorderseite des nicht veränderbaren Teils (310) befindet, wobei der modulierbare Teil (320), zusammen mit dem nicht veränderbaren Teil (310), die Länge der Sitzverlängerung zwischen der hinteren Öffnung und dem vorderen Boden der Schale (300) definiert, wobei die Länge bei der Einrichtung der Kabine durch eine Befestigungsstellung des modulierbaren Teils in Bezug auf den nicht veränderbaren Teil der Schale oder durch eine angepasste Länge des modulierbaren Teils moduliert werden kann,
wobei, in der Kabine, die Sitzverlängerungen der Vielzahl von Baugruppen eine konstante und im Gebrauch des Sitzes nicht modifizierbare Länge aufweisen.

2. Kabine nach Anspruch 1, wobei die Länge der Sitzverlängerung bei der Einrichtung der Kabine modifiziert werden kann, um mit einer minimalen Länge, einer maximalen Länge und mindestens einer Zwischenlänge zwischen der minimalen und der maximalen Länge befestigt zu werden.

3. Kabine nach Anspruch 2, wobei die minimale Länge der Sitzverlängerung im Wesentlichen gleich einer Länge des nicht veränderbaren Teils ist.

4. Kabine nach einem der Ansprüche 2 oder 3, wobei der modulierbare Teil (320) zwischen einer ersten Stellung, in der er ganz oder zum Teil in den nicht veränderbaren Teil (310) der Schale (300) eingeschoben ist, sodass die Länge der Sitzverlängerung minimal ist, und mindestens einer zweiten Stellung befestigt ist, in der der modulierbare Teil (320) ganz oder zum Teil zur Vorderseite der Sitzverlängerung (200, 200A, 200W) nach außen gezogen ist und die Länge der Sitzverlängerung in Bezug auf die minimale Länge vergrößert ist.

5. Kabine nach Anspruch 1, wobei mindestens einer der modulierbaren Teile (320) der Sitzverlängerungen der Vielzahl von Sitz-/Sitzverlängerung-Baugruppen eine Länge umfasst, die sich von den anderen modulierbaren Teilen (320) der Vielzahl von Sitz-/Sitzverlängerung-Baugruppen unterscheidet.

6. Kabine nach einem der Ansprüche 2 bis 5, wobei der modulierbare Teil (320) zum nicht veränderbaren Teil (310) der Schale (300), in die er sich ganz oder zum Teil einfügt, verschiebbar und so eingebaut wird, dass ein Abschnitt des modulierbaren Teils zwischen der ersten eingeschobenen Stellung oder der zweiten ausgezogenen Stellung, oder in einer Zwischenstellung zwischen der ersten Stellung und der zweiten Stellung befestigt werden kann.

7. Kabine nach einem der Ansprüche 1 bis 6, wobei der modulierbare Teil (320) der Schale (300) ein an den Fußablagebereich (400) angrenzendes Hohlvolumen umfasst, wobei das Hohlvolumen so eingerichtet ist, dass es eine Länge des Fußablagebereichs (400) vergrößert und/oder Räume zum Verstauen von Gegenständen bildet und/der integriert.

8. Kabine nach Anspruch 1 bis 7, wobei der modulierbare Teil (320) der Schale (300) eine Außenseite umfasst, die mit einer Außenseite des nicht veränderbaren Teils (310) durchgängig ist, wobei ein oberer Teil der Seiten zusammen eine im Wesentlichen ebene und im Wesentlichen horizontale Fläche bildet, um Gegenstände abzulegen, oder um Räume zum Verstauen von Gegenständen zu integrieren.

9. Kabine nach einem der Ansprüche 1 bis 8, wobei jede der Baugruppen, die einen Sitz und eine Sitzverlängerung umfasst, durch eine zusammenhängende Bewegung einer Sitzfläche und einer Rückenlehne zum Bett umgebaut werden kann, das eine im Wesentlichen horizontale und mit dem Fußablagebereich der Sitzverlängerung, die vor dem Sitz platziert ist, durchgängige Fläche bildet.

10. Kabine nach einem der Ansprüche 1 bis 9, wobei jede Sitzverlängerung seitlich eines Sitzes in einer dem Sitz und der Sitzverlängerung gemeinsamen Struktur angeordnet ist, wobei die Sitzverlängerung für einen dahinter befindlichen Sitz bestimmt ist.

11. Verfahren zur Einrichtung einer Kabine nach einem der Ansprüche 1 bis 10, wobei:
- die Sitze der Vielzahl von Sitzbaugruppen in zu Laufgängen (50) der Kabine parallelen Reihen (110) angeordnet sind;
- zwei aufeinanderfolgende Sitze in der gleichen Reihe (110) gemäß einer Teilung P und versetzt angeordnet sind, sodass ein als hinterer Sitz bezeichneter Sitz in Bezug auf einen als vorderer Sitz bezeichneten Sitz, der dem hinteren Sitz in der Reihe vorangeht, seitlich versetzt und in Bezug auf den vorderen Sitz auf der gleichen Seite liegt wie eine angrenzende Sitzverlängerung des vorderen Sitzes;
- ein Raum, der sich zwischen einer Rückenlehne eines an einen Laufgang (50) anschließenden vorderen Sitzes (10A) und einer angrenzenden Vorderseite einer an den Laufgang (50) anschließenden Sitzverlängerung (200A) eines hinteren Sitzes (10W) befindet, wobei der hintere Sitz durch die Sitzverlängerung (200A) vom Laufgang getrennt ist, einen Durchgang (41) einer Breite L bildet, durch den ein Nutzer des hinteren Sitzes (10W) vom Gang (50) aus zum hinteren Sitz gelangen kann;
- der modulierbare Teil (320) der angrenzenden und an einen Gang anschließenden Sitzverlängerung (200A) des hinteren Sitzes (10W) in Abhängigkeit von der Teilung P der Sitze am nicht veränderbaren Teil (310) der Sitzverlängerung befestigt wird, um eine Breite L des Durchgangs (41) von gleich oder größer einer vordefinierten minimalen Breite Lmin zu bestimmen.

12. Einrichtungsverfahren nach Anspruch 11, wobei der modulierbare Teil (320) einer angrenzenden Sitzverlängerung (200W) eines hinteren Sitzes (10A), der an einen Gang (50) anschließt, wobei die Sitzverlängerung (200W) auf einer dem Gang gegenüberliegenden Seite des Sitzes liegt, am nicht veränderbaren Teil (310) der Sitzverlängerung (200W) befestigt wird, um einen zwischen einer Rückenlehne des vorderen Sitzes (10W) und einer Vorderseite der Sitzverlängerung (200W) befindlichen Raum einer Breite LW, in einer im Wesentlichen zum Gang (50) parallelen Richtung gemessen, zu bestimmen, die kleiner ist als die Breite L des Durchgangs (41).

13. Einrichtungsverfahren nach Anspruch 11, wobei der modulierbare Teil (320) der angrenzenden und an einen Gang anschließenden Sitzverlängerung (200A) des hinteren Sitzes (10W) am nicht veränderbaren Teil (310) der Sitzverlängerung (200) befestigt wird, um eine Breite des Durchgangs (41) von im Wesentlichen gleich der vordefinierten minimalen Breite Lmin zu erhalten, die mit einer Verlängerung ΔP der Länge zwischen der Öffnung und dem Boden der Schale (300) in Bezug auf eine minimal mögliche Länge zwischen der Öffnung und dem Boden der Schale erhalten wird, sodass die Länge eines Bettes, die sich aus der Kombination des zum Schlafen umgebauten Sitzes mit der Sitzverlängerung ergibt, bei einer gegebenen Teilung der Sitze P unter Beachtung der minimalen Breite Lmin des Durchgangs (41) maximiert wird.

## Claims

1. Cabin of a vehicle for transporting passengers including a plurality of units, each unit including a seat (10, 10A, 10W) and a seat extension (200, 200A, 200W) arranged staggered in said plurality of units, wherein each seat extension (200, 200A, 200W) includes a shell (300) including a front end and a rear opening determined by a hollow volume open towards the rear and a footrest area (400) inside said hollow volume, the shell of each of the seat extensions including:
- an invariant portion (310) including a structure having fixed and identical dimensions for all the seat extensions of said plurality of units, and
- a modular portion (320) located at the front of said invariant portion (310), said modular portion (320), together with the invariant portion (310), defining the length of the seat extension between the rear opening and the front end of the shell (300), said length being modular, when arranging the cabin, by a fixing position of said modular portion with respect to the invariant portion of the shell or by an adapted length of said modular portion, in said cabin, the seat extensions of said plurality of units having a constant and non-modifiable length during the use of the seat.

2. Cabin according to claim 1, wherein the length of said seat extension is modifiable, when arranging the cabin, to be fixed with a minimum length, a maximum length and at least one intermediate length between the minimum and maximum length.

3. Cabin according to claim 2, wherein the minimum length of said seat extension is substantially equal to a length of the invariant portion.

4. Cabin according to one of claims 2 or 3, wherein the modular portion (320) is fixed between a first position wherein it is retracted entirely or partially into the invariant portion (310) of the shell (300) in such a way that the length of the seat extension is minimal and, at least one second position wherein the modular portion (320) is deployed entirely or partially outside towards the front of the seat extension (200, 200A, 200W) and the length of the seat extension is increased with respect to the minimum length.

5. Cabin according to claim 1, wherein at least one of the modular portions (320) of the seat extensions of the plurality of seat-seat extension units includes a different length from the other modular portions (320) of the plurality of seat-seat extension units.

6. Cabin according to one of claims 2 to 5 wherein the modular portion (320) is slidably mounted with the invariant portion (310) of the shell (300) wherein it fits entirely or partially and in such a way that a portion of the modular portion can be fixed between the first retracted position or the second deployed position or in an intermediate position between the first position and the second position.

7. Cabin according to one of claims 1 to 6 wherein the modular portion (320) of the shell (300) includes a hollow volume adjacent to the footrest area (400), said hollow volume being arranged in order to increase a length of the footrest area (400) and/or, to form and/or integrate spaces for storing objects.

8. Cabin according to claim 1 to 7 wherein the modular portion (320) of the shell (300) includes an outer face in continuity with an outer face of the invariant portion (310), an upper portion of said faces forming together a substantially planar and substantially horizontal surface for placing objects, or for integrating spaces for storing objects.

9. Cabin according to one of claims 1 to 8, wherein each of the units including a seat and a seat extension is convertible into a bed by a combined movement of a seat section and a backrest forming a substantially horizontal surface and in continuity with the footrest area of the seat extension which is placed in front of said seat.

10. Cabin according to one of claims 1 to 9, wherein each seat extension is arranged laterally to a seat in a common structure to said seat and said seat extension, said seat extension being intended for a seat located to the rear.

11. Method for arranging a cabin according to one of claims 1 to 10, wherein:
- the seats of the plurality of seat units are arranged in rows (110) parallel to circulation aisles (50) of the cabin;
- two successive seats in the same row (110) are arranged according to a pitch P and staggered in such a way that a seat, or rear seat, is laterally offset with respect to a seat, or front seat, preceding said rear seat in said row, and on the same side with respect to the front seat as a seat extension adjacent to said front seat;
- a space located between a backrest of a front seat (10A), adjoining a circulation aisle (50), and a front face of a seat extension (200A), adjoining said circulation aisle (50), adjacent to a rear seat (10W), said rear seat being separated from said circulation aisle by said seat extension (200A), forms a passage (41) of width L through which an occupant of a rear seat (10W) can access said rear seat from the aisle (50);
- the modular portion (320) of the seat extension (200A) adjoining an aisle and adjacent to the rear seat (10W) is fixed to the invariant portion (310) of said seat extension according to the pitch P of the seats in order to determine a width L of the passage (41) greater than or equal to a predefined minimum width Lmin.

12. Arranging method according to claim 11, wherein the modular portion (320) of a seat extension (200W) adjacent to a rear seat (10A) adjoining an aisle (50), said seat extension (200W) being on a side of said seat opposite said aisle, is fixed to the invariant portion (310) of said seat extension (200W) in order to determine a space located between a backrest of the front seat (10W) and a front face of said seat extension (200W) of a width LW, taken along a direction substantially parallel to the aisle (50), less than the width L of the passage (41).

13. Arranging method according to claim 11, wherein the modular portion (320) of the seat extension (200A) adjoining an aisle and adjacent to the rear seat (10W) is fixed to the invariant portion (310) of said seat extension (200) in order to obtain a width of the passage (41) substantially equal to the predefined minimum width Lmin, obtained with an extension ΔP of the length between the opening and the end of the shell (300), with respect to a possible minimum length between said opening and said end of the shell, in such a way that the length of a bed, resulting from the combination of the seat converted into bedding with the seat extension, is maximised for a given seat pitch P by respecting the minimum width Lmin of the passage (41).
